# EUROPÄISCHE PATENTSCHRIFT

(11) **EP 0 895 587 B1**
(45) Veröffentlichungstag und Bekanntmachung des Hinweises auf die Patenterteilung: **02.10.2002**
(21) Anmeldenummer: 97920722.2
(22) Anmeldetag: 19.04.1997
(51) Int. Cl.: G01N 21/05

(54) **KAPILLARHALTER**
CAPILLARY TUBE HOLDER
SUPPORT DE TUBE CAPILLAIRE

(30) Priorität: 23.04.1996 DE 29607239 U
(43) Veröffentlichungstag der Anmeldung: 10.02.1999
(73) Patentinhaber: J & M Analytische Mess- Und Regeltechnik GmbH, 73431 Aalen (DE)
(72) Erfinder: MANNHARDT, Joachim, D-73569 Eschach (DE)
(74) Vertreter: Lorenz, Werner, Dr.-Ing.
(86) Internationale Anmeldenummer: EP9701984
(87) Internationale Veröffentlichungsnummer: WO97040363

(56) Entgegenhaltungen:
- DE-A- 4 024 420
- FR-A- 2 643 147
- US-A- 5 408 313
- US-A- 5 413 866

## Beschreibung

Die Erfindung betrifft einen Kapillarhalter nach der im Oberbegriff von Anspruch 1 näher definierten Art.

Gattungsgemäße Kapillarhalter, die beispielsweise zur MikroHPLC (Micro high performance liquid chromatographie = Mikrohochleistungsflüssigkeitschromatographie) sowie zur CE/CZE (Kapillar-Elektrophorese/Kapillarzonen-Elektrophorese) verwendet werden, sind aus der Praxis bekannt.

Hierbei wird an einer Kapillare, die üblicherweise aus Quarz besteht, ein transparentes Fenster freigebrannt und dieses anschließend gereinigt, wonach die Kapillare in eine Aussparung in dem Kapillarhalter eingeschoben und so in dem Kapillarhalter justiert wird, daß das transparente Fenster im Bereich zweier sich axial bezüglich der Kapillare in dem Kapillarhalter gegenüberliegend angeordneter Lichtkanäle zu liegen kommt, wobei die exakte Positionierung der Kapillare bzw. des beschriebenen Fensters in dem Kapillarhalter mittels der Auswerteeinrichtung, wie beispielsweise eines Spektrometers, ermittelbar ist.

Beim Messvorgang mit den bekannten Kapillarhaltern werden durch den Eingangslichtkanal Lichtstrahlen zu dem transparenten Fenster in der Kapillare geleitet, durch welche ein Medium, insbesondere eine Flüssigkeit, an welchem Messungen oder Bestimmungen vorgenommen werden sollen, strömt.

In dem Eingangslichtkanal ist eine geeignete Optik zur Bündelung der Lichtstrahlen vorgesehen, wobei die gebündelten Lichtstrahlen durch die Kapillare bzw. das Fenster in der Kapillare und das die Kapillare durchströmende Medium durchtreten, wonach die Lichtstrahlen durch den Lichtausgangskanal einem Detektor bzw. einem Spektrometer oder einer anderen geeigneten Auswerteeinrichtung zugeführt werden.

In der FR 2 643 147 A1 ist ein Meßsystem mit optischen Bauteilen beschrieben, die eine Lichtausdehnung in alle Richtungen bewirken. Es erfolgt eine Durchstrahlung durch ein optisch abbildendes Element, wobei nur größere Einheiten erfaßt werden können. Kapillarmessungen sind damit nicht möglich.

Aus der US-A-5 413 686 ist ein Kapillarhalter bekannt, der eine Aussparung zur Aufnahme einer Kapillare und senkrecht zur Axialrichtung der Aussparung einen Eingangs- und einen Ausgangslichtkanal aufweist. Dabei besteht jeder Lichtleiter nur aus einer einzigen Einzelfaser.

Nachteilig bei bekannten Kapillarhaltern ist weiterhin, daß insgesamt nur eine unzureichende Lichtmenge des durch den Eingangslichtkanal zugeführten Lichtes durch die Kapillare durchtritt und somit auch eine nur unzureichende Lichtmenge der Auswerteeinrichtung zugeführt werden kann. Dies kommt daher, weil die Kapillare beispielsweise einen Innendurchmesser von nur 75 um aufweist, d.h. die nutzbare Lichtmenge, die durch die Kapillare hindurchgeleitet werden kann, kann sich nur über diese Querschnittsfläche verteilen.

Weiterhin wird auch ein verhältnismäßig großer Anteil des durch den Eingangslichtkanal zugeführten Lichtes ungenutzt über die Außenwandung der Kapillare zu dem Ausgangslichtkanal geleitet, d.h. das zugeführte Licht tritt nicht durch das die Kapillare durchströmende Medium hindurch, was einerseits eine Beeinträchtigung des Messergebnisses in der Auswerteeinrichtung zur Folge hat und andererseits dazu führt, daß die Empfindlichkeit der dem Kapillarhalter nachgeschalteten Auswerteeinrichtung, beispielsweise einem Detektor oder einem Spektrometer, verringert wird, da der Nutzanteil des von der Auswerteeinrichtung empfangenen Lichtes bzw. des zur Absorption beitragenden Lichtes zu gering ist. Das Licht wird also zu einem beträchtlichen Teil nicht zur Absorption des Medienstromes in der Kapil lare verwendet, sondern geht teilweise ungenutzt durch die Seitenwand der Kapillare hindurch.

Da, wie bereits erwähnt, diese Tatsache sich nachteilig auf die Empfindlichkeit der Messanordnung auswirkt, führen die beschriebenen Nachteile zu einer erheblichen Beeinträchtigung der Messergebnisse.

Der vorliegenden Erfindung liegt daher die Aufgabe zugrunde, einen Kapillarhalter vorzusehen, welcher die beschriebenen Nachteile des Standes der Technik beseitigt, insbesondere bei dem ein größerer Anteil des durch den Eingangslichtkanal zugeführten Lichtes durch das die Kapillare durchströmende Medium hindurchtritt.

Erfindungsgemäß wird diese Aufgabe durch die im kennzeichnenden Teil von Anspruch 1 genannten Merkmale gelöst.

Durch die Verwendung von Lichtleitern mit Einzelfasern wird insgesamt ein größerer Anteil des dem Kapillarhalter zugeführten Lichtes der Kapillare und somit auch dem die Kapillare durchströmenden Medium zugeleitet.

Die verwendeten Lichtleiter mit den Einzelfasern werden hierbei direkt vor die Kapillare gesetzt, so daß die Kapillare als Optik wirkt und den Lichtstrahl bzw. die Lichtstrahlen, die durch den Eingangslichtkanal zugeführt werden, soweit ablenkt, daß annähernd 90 % der Lichtstrahlen durch das Medium und zu dem Ausgangslichtkanal geleitet werden, d.h. es sind 90 % der Lichtstrahlen an der Absorption beteiligt. Hierbei ist keine optische Abbildung notwendig, sondern die Kapillare selbst wird hierzu verwendet. Gegenüber dem Stand der Technik liegt somit der Nutzanteil des zugeführten Lichtes bei dem erfindungsgemäßen Kapillarhalter wesentlich höher.

Zwischen dem jeweiligen Lichtleiter und der Kapillare verbleibt immer ein geringer Spalt, der z.B. durch Pertigungstoleranzen der Kapillare bedingt ist. Ansonsten werden die Lichtleiter jedoch so dicht wie möglich an die Kapillare herangebracht.

Da die Einzelfasern als Faserbündel des weiteren jeweils einen Durchmesser aufweisen, welcher wenigstens annähernd so groß wie der Innendurchmesser der Kapillare ist, wird gerade soviel Licht durch jede Einzelfaser zugeführt, daß dieses nicht zu einem Großteil durch die Wandung der Kapillare geleitet wird und andererseits nicht unnötig viel Licht der Kapillare zugeführt wird.

Erfindungsgemäß wird das ankommende Lichtbündel aus mehreren Einzelfasern an der Kapillaren entweder in Längsrichtung aufgespalten oder radial in einem Halbkreis herumgelegt, wobei auch eine Kombination aus beiden, d.h. Längsund Radialrichtung, möglich ist. In gleicher Weise sind die abgehenden d.h. die Ausgangsstrahlen bzw. die empfangenden Lichtleiter entsprechend dazu angeordnet.

In Weiterbildung der Erfindung kann hierzu vorgesehen sein, daß die Lichtleiter an ihren der Aussparung zugewandten Enden jeweils ein Querschnittswandlungsglied zum Umwandeln der Querschnittsfläche der Lichtleiter aufweisen, d.h. die Querschnittswandlungsglieder sind Bestandteil der Lichtleiter.

Mittels dieser Querschnittswandlungsglieder können die beispielsweise runden Querschnitte der Lichtleiter bzw. der Faserbündel in dem Eingangslichtkanal und dem Ausgangslichtkanal auf andere geeignete Querschnitte bzw. Querschnittsformen, die an anderer Stelle beschrieben werden, umgesetzt werden.

Querschnittswandlungsglieder in unterschiedlichsten Ausführungen sind bereits aus der Praxis für andere Anwendungszwecke bekannt. Mittels der Querschnittswandlungsglieder, die so dicht wie möglich gepackt sind, soll die größtmögliche Lichtleistung auf kleinster Fläche erzielt werden, was beispielsweise dadurch erreicht werden kann, daß mehrere Einzelfasern der Lichtleiter im Bereich der Mündung der Lichtkanäle in die Aussparung parallel zur Längsachse der Aussparung, also entlang einer Geraden, angeordnet sind, d.h. die Gesamtheit der Einzelfasern, die normalerweise eine runde Querschnittsfläche aufweist, wird in eine Vielzahl von kleineren Einzelquerschnitten zerlegt bzw. umgewandelt.

Die Nutzquerschnittsfläche der Lichtleiter ist bei der beschriebenen Anordnung der Lichtleiter in einer Geraden, bei der mehrere Einzellichtfasern mit entsprechend geringer Querschnittsfläche Lichtstrahlen durch die Kapillare leiten, optimal an die Querschnittsfläche der Kapillare anpaßbar.

Alternativ können jedoch auch mehrere Einzelfasern der Lichtleiter radial über den äußeren Durchmesser der Aussparung bzw. der Kapillare verteilt angeordnet sein, wodurch ebenfalls die erwähnten Vorteile erzielbar sind.

Auch diese vorteilhafte Anordnung ist erst durch den Einsatz der bereits erwähnten Querschnittswandlungsglieder möglich, mit denen eine nahezu optimale Ausbeute des durch den Eingangslichtkanal zugeführten Lichtes möglich ist, d.h. der Nutzanteil des zugeführten Lichts, der zur Auswertung an die Auswerteeinrichtung weitergeleitet wird, ist bei diesen beiden beschriebenen Anordnungen bzw. Ausführungen besonders hoch.

In Weiterbildung der Erfindung kann auch vorgesehen sein, daß jeder Ausgangslichtkanal seinem zugeordneten Eingangslichtkanal bezüglich der Aussparung diametral gegenüber liegt, d.h. der Ausgangslichtkanal befindet sich in der Verlängerung des Eingangslichtkanals auf der gegenüberliegenden Seite der Kapillare bzw. der Aussparung.

Mit dieser Anordnung sind Messungen der Absorption des durch die Kapillare hindurchströmenden Mediums möglich, da das Licht bzw. die Lichtstrahlen direkt durch die Kapillare bzw. das strömende Medium hindurch zu dem Lichtleiter im Ausgangslichtkanal geleitet werden.

Alternativ kann jedoch auch vorgesehen sein, daß bei zwei Paaren von Lichtkanälen jeweils die beiden Eingangslichtkanäle und die beiden Ausgangslichtkanäle sich diametral gegenüberliegend bezüglich der Aussparung angeordnet sind, d.h. jedem Eingangslichtkanal liegt ein Eingangslichtkanal gegenüber und ebenso liegt jedem Ausgangslichtkanal auch ein Ausgangslichtkanal gegenüber.

Mit dieser Anordnung kann die Fluoreszenz des die Kapillare durchströmenden Mediums gemessen werden.

Um genaue Messergebnisse zu erhalten, entspricht die Anzahl der Einzelfasern in jedem Eingangslichtkanal vorteilhafterweise jeweils der Anzahl der Einzelfasern in jedem zugeordneten Ausgangslichtkanal.

In einfacher Weise können die Lichtleiter biegsam bzw. flexibel ausgeführt sein, so daß die Lichtstrahlen problemlos der Kapillare zuführbar sind.

Durch diese Maßnahme kann auch die Baugröße des erfindungsgemäßen Kapillarhalters verringert werden, da die Lichtstrahlen nicht nur, wie vom Stand der Technik bekannt, über gerade Strecken geleitet werden können, sondern entsprechend den Verformungsmöglichkeiten der Lichtleiter nahezu beliebige Formen der Lichtzu- und -ableitungen möglich sind.

Die Lichtleiter können aus Quarz-Quarz-Fasern bestehen, welche gegebenenfalls mit einer Bufferbeschichtung, also einer geeigneten Polymer-Beschichtung, versehen sein können, welche die Festigkeit der verwendeten Fasern erhöht und diese besser vor Bruch schützt.

Damit dem erfindungsgemäßen Kapillarhalter ein möglichst breites Anwendungsspektrum zugänglich ist, können an der Außenseite des Kapillarhalters, d.h. an der Außenseite des Gehäuses des Kapillarhalters, Anschlußglieder für weitere Lichtleiter vorgesehen sein, wobei die Anschlußglieder beispielsweise als Stifte oder auch als standardisierte Steckverbindungen ausgebildet sein können.

Der Kapillarhalter kann somit in einfacher Weise in bereits vorhandene Messanordnungen, in denen Lichtleiter zur Zuführung von Lichtstrahlen verwendet werden, integriert werden.

Nachfolgend sind anhand der Zeichnung einige Ausführungsbeispiele der vorliegenden Erfindung prinzipmäßig beschrieben.

Es zeigt:
- Fig. 1: eine dreidimensionale Ansicht eines erfindungsgemäßen Kapillarhalters gemäß dem Pfeil I der Fig. 2;
- Fig. 2: einen Längsschnitt durch den Kapillarhalter nach der Fig. 1;
- Fig. 3: schematisch einen erfindungsgemäßen Kapillarhalter zur Messung von Absorption;
- Fig. 4: schematisch einen erfindungsgemäßen Kapillarhalter zur Messung von Fluoreszenz;
- Fig. 5: schematisch eine mögliche Anordnung von Einzelfasern in einem erfindungsgemäßen Kapillarhalter; und
- Fig. 6: schematisch einen Schnitt durch einen erfindungsgemäßen Kapillarhalter, der zur Messung von Fluoreszenz geeignet ist.

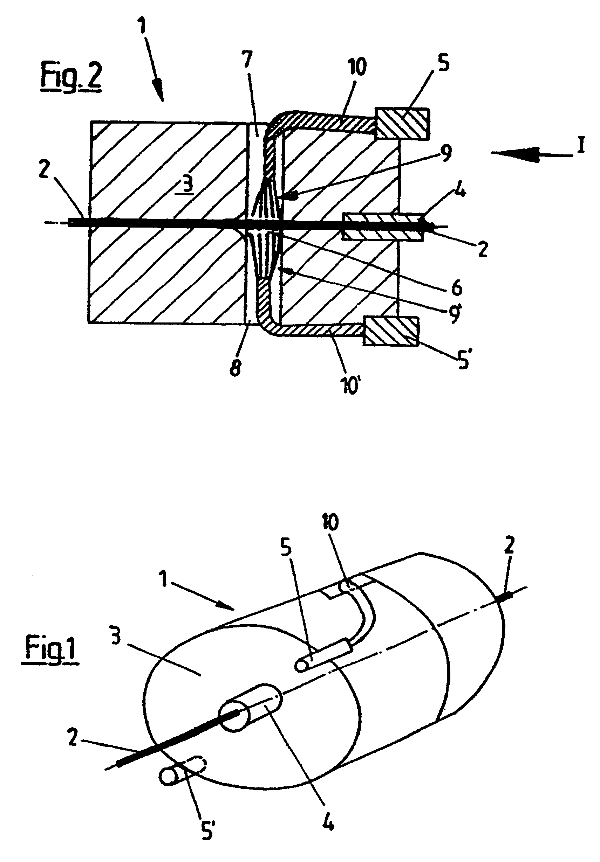

Bezug nehmend auf Fig. 1 ist eine dreidimensionale Ansicht eines Kapillarhalters 1 dargestellt, welcher eine in der Fig. 2 dargestellte Aussparung 6 aufweist, durch welche eine Kapillare 2 bekannter Bauart geführt ist. Durch die Kapillare 2 strömt ein Medium, welches zur Verdeutlichung schwarz in der Kapillare 2 dargestellt ist.

Die Aussparung 6 ist in einer Aufnahme bzw. einem Gehäuse 3 des Kapillarhalters 1 angeordnet und verläuft durch die Längsachse desselben.

Die Kapillare 2 ist in das Gehäuse 3 eingeschoben und mittels einer Spannzange 4 in der Aussparung 6 und somit auch in dem Gehäuse 3 fixiert.

Die Aussparung 6, die in dem vorliegenden Ausführungsbeispiel zentrisch in dem Gehäuse 3 angeordnet ist, kann beispielsweise als Bohrung ausgeführt sein.

Außenseitig an dem Gehäuse 3 des Kapillarhalters 1 sind als Stifte 5, 5' ausgebildete Anschlußglieder angeordnet, über welche nicht dargestellte Lichtleiter, beispielsweise als Monofasern ausgebildete Lichtleiter, auf geeignete Art und Weise an den Kapillarhalter 1 angekoppelt werden können, wobei mittels der nicht dargestellten Lichtleiter Lichtstrahlen von einer Lichtquelle (nicht dargestellt) zu dem Kapillarhalter 1 über den Stift 5 geleitet werden, wonach die Lichtstrahlen wie an anderer Stelle beschrieben durch die Kapillare 2 hindurchgeleitet und anschließend über den Stift 5' einer Auswerteeinrichtung, wie beispielsweise einem Detektor oder einem Spektrometer, zugeführt werden.

Die Stifte 5, 5' wie auch andere geeignete Anschlußglieder können auf beliebige und dem Fachmann bekannte Weise an dem Kapillarhalter 1 angebracht sein.

Fig. 2 zeigt einen Längsschnitt durch den Kapillarhalter 1 der Fig. 1.

Aus dieser Ansicht ist erkennbar, daß in Axialrichtung der durch das gesamte Gehäuse 3 verlaufenden Aussparung 6, die somit als Durchgangsbohrung ausgebildet ist, ein Paar von Lichtkanälen vorgesehen ist, die sich diametral gegenüberliegend bezüglich der Aussparung 6 angeordnet sind, wobei der dem Stift 5 zugewandte Lichtkanal nachfolgend als Eingangslichtkanal 7 bezeichnet werden soll, während der dem Stift 5' zugewandte Lichtkanal nachfolgend als Ausgangslichtkanal 8 bezeichnet werden soll.

Durch die Bezeichnungen soll klargestellt werden, daß über den Stift 5 von außen zugeführte Lichtstrahlen durch den Eingangslichtkanal 7 der Kapillare 2, die wie bereits erwähnt in der Aussparung 6 angeordnet ist, zugeführt werden, wonach die durch die Kapillare und selbstverständlich auch durch ein die Kapillare 2 durchströmendes Medium durchgetretenen Lichtstrahlen über den Ausgangslichtkanal 8 dem Stift 5' und über die nicht dargestellten Lichtleiter der Auswerteeinrichtung zugeführt werden.

Sowohl in dem Eingangslichtkanal 7 als auch in dem Ausgangslichtkanal 8 sind Querschnittswandlungsglieder 9, 9' angeordnet, auf deren Funktion an anderer Stelle eingegangen werden soll, wobei die Querschnittswandlungsglieder 9, 9' jeweils an dem der Aussparung 6 zugewandten Ende von Lichtleitern 10, 10' angeordnet und somit Bestandteil der Lichtleiter 10, 10' sind.

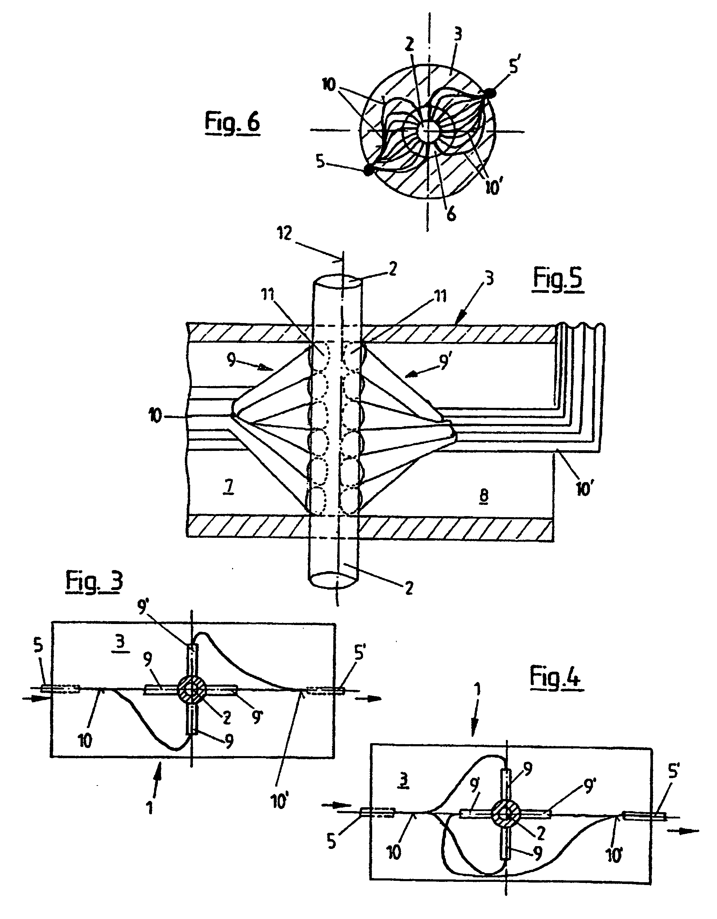

Der Lichtleiter 10, der zwischen dem Stift 5 und dem Querschnittswandlungsglied 9 im Eingangslichtkanal 7 angeordnet ist, ist als Faserbündel ausgebildet und besteht somit aus Einzelfasern 11 (s. Fig. 5), während analog hierzu zwischen dem Stift 5' und dem Querschnittswandlungsglied 9' im Ausgangslichtkanal 8 ein Lichtleiter 10' vorgesehen ist.

Die Lichtleiter 10, 10' und die Querschnittswandlungsglieder 9, 9' sind somit in die jeweiligen Lichtkanäle 7, 8 eingesetzt.

Die Lichtleiter 10, 10' sind flexibel ausgeführt, so daß die Stifte 5, 5' an geeigneten Stellen auf der Außenseite des Gehäuses 3 angeordnet werden können, wodurch die Außenabmessungen des dargestellten Kapillarhalters 1 wesentlich verringert werden können. Auch die Lichtkanäle 7, 8 müssen aus diesem Grund nicht mehr, wie beim Stand der Technik notwendig, geradlinig verlaufen, sondern können gegebenenfalls auch in Kurven angeordnet sein.

Der dargestellte zylinderförmige Kapillarhalter 1 weist beispielsweise eine Längserstreckung von ungefähr 30 mm sowie einen Durchmesser von ca. 15 bis 20 mm auf.

Die Querschnittswandlungsglieder 9, 9' sind in dem dargestellten Ausführungsbeispiel mit einem geringen Spalt, der zur Verdeutlichung in der Fig. 2 vergrößert dargestellt ist, direkt vor der Kapillare 2 angeordnet, so daß die zugeführten Lichtstrahlen zu ca. 90 % durch das strömende Medium hindurchtreten und anschließend dieser hohe Anteil an Nutzlicht von der nachgeschalteten Auswerteeinrichtung aufgenommen und verwertet werden kann, so daß die Empfindlichkeit der verwendeten Detektoreinrichtung bzw. Auswerteeinrichtung entsprechend hoch ist.

In den Fig. 1 und 2 ist ein Kapillarhalter 1 mit nur einem Paar von Lichtkanälen (Eingangslichtkanal 7, Ausgangslichtkanal 8) dargestellt.

Es liegt jedoch selbstverständlich im Ermessen des Fachmannes, auch Kapillarhalter 1 mit mehreren Paaren von Lichtkanälen vorzusehen, wie dies schematisch in den Fig. 3 und 4 dargestellt ist.

Hierbei sollen nachfolgend für bereits im Zusammenhang mit den Fig. 1 und 2 eingeführte Bauteile jeweils dieselben Bezugszeichen verwendet werden.

Fig. 3 zeigt schematisch eine Anordnung eines Kapillarhalters 1, welcher zwei nicht näher dargestellte Paare von Lichtkanälen mit jeweils einem Eingangslichtkanal und einem Ausgangslichtkanal zeigt, wobei sich jeweils ein Ausgangslichtkanal 8 und ein Eingangslichtkanal 7 diametral bezüglich der Kapillare 2 gegenüberliegen und die beiden Paare von Lichtkanälen um 90° bezüglich der Längsachse 12 (s. Fig. 5) der Kapillare 2 versetzt zueinander angeordnet sind.

Eine derartige Anordnung wird zur Messung von Absorption in dem die Kapillare 2 durchströmenden Medium verwendet.

Auch bei dieser Anordnung werden Lichtstrahlen über den Stift 5 einem Lichtleiter 10 zugeführt, wobei jedoch der Lichtleiter 10 eine Verzweigung aufweist, so daß jeweils die Hälfte der zugeführten Lichtstrahlen zu jedem der beiden dargestellten Querschnittswandlungsglieder 9 geleitet werden. Diese Aufteilung der ankommenden Lichtstrahlen wird vorgenommen, weil die Höhe bzw. Längserstreckung des Kapillarhalters 1 endlich ist und somit nur eine bestimmte Anzahl von Einzelfasern 11 (s. Fig. 5) beispielsweise nebeneinanderliegend in die Aussparung 6 münden können. Durch die Aufteilung der Lichtstrahlen wird die maximal mögliche Anzahl von nebeneinander liegenden Einzelfasern verdoppelt und somit auch die Lichtausbeute verbessert.

Nach dem Durchgang durch die Kapillare 2 werden die Lichtstrahlen von den jeweils gegenüberliegenden Querschnittswandlungsgliedern 9' aufgenommen und dem Lichtleiter 10', der analog zum Lichtleiter 10 eine Verzweigung aufweist, zugeführt und über den Stift 5' an die nicht dargestellte Auswerteeinrichtung weitergeleitet.

Eine ähnliche Anordnung weist der in der Fig. 4 schematisch dargestellte Kapillarhalter 1 auf. Im Gegensatz zu der Anordnung nach der Fig. 3 sind jedoch bei dem Ausführungsbeispiel nach der Fig. 4 jeweils die mit dem Stift 5 verbundenen Querschnittswandlungsglieder 9 sich diametral gegenüberliegend bezüglich der Kapillare 2 angeordnet. Analog sind auch die mit dem Stift 5' verbundenen Querschnittswandlungsglieder 9' sich jeweils diametral gegenüberliegend angeordnet, wobei aufgrund dieser Anordnung eine Messung der Fluoreszenz in dem die Kapillare 2 durchströmenden Medium möglich ist, da sich jeweils zwei Eingangslichtkanäle und zwei Ausgangslichtkanäle gegenüberliegen.

Es liegt selbstverständlich im Ermessen des Durchschnittsfachmannes, anstatt der zwei in den Fig. 3 und 4 dargestellten Paare von Lichtkanälen auch noch mehr Lichtkanäle, beispielsweise vier Paare, radial in dem Kapillarhalter 1 vorzusehen. Eine derartige Anordnung mit mehreren Paaren von Lichtkanälen, die radial verteilt in der Aussparung 6 angeordnet sind, ist stark vereinfacht zur Messung von Absorption in der Fig. 6 dargestellt.

Da jedoch bei zunehmender Anzahl der Lichtpaare immer mehr Streulicht entsteht, kann die Möglichkeit der Fluoreszenzmessung bei einer derartigen Anordnung mehrerer Lichtkanäle beeinträchtigt werden, während Messungen der Absorption nicht beeinträchtigt werden.

Fig. 5 zeigt schematisch einen Ausschnitt aus einem Kapillarhalter, wobei in den dargestellten Querschnittswandlungsgliedern 9, 9' die Einzelfasern der Lichtleiter 10, 10' (siehe Fig. 2), die ganz allgemein mit dem Bezugszeichen 11 gekennzeichnet sind, so aufgeteilt werden, daß sie parallel zur Längsachse 12 der Kapillare 2 verlaufen, d.h. die ursprünglich runde Querschnittsform der Gesamtheit der Einzelfasern 11 der Lichtleiter 10, 10' wird zu einer Geraden umgewandelt.

Durch diese Anordnung kann ein sehr großer Anteil der über den Eingangslichtkanal 7 dem Querschnittswandlungsglied 9 zugeführten Lichtstrahlen auch tatsächlich durch das die Kapillare 2 durchströmende Medium hindurchtreten, was gegenüber dem Stand der Technik einen wesentlichen Vorteil darstellt, da bei bekannten Kapillarhaltern ein verhältnismäßig großer Anteil der zugeführten Lichtstrahlen durch die Außenwandung der Kapillare 2 geleitet wird und hierdurch die Empfindlichkeit der Auswerteeinrichtung stark verringert wird und dadurch die Messergebnisse beeinträchtigt werden.

Mit dem beschriebenen Kapillarhalter können somit in einfacher Weise gegenüber dem Stand der Technik bessere Messergebnisse erzielt werden.

## Patentansprüche

1. Kapillarhalter, mit einer Kapillare und mit einer Aussparung zur Aufnahme der Kapillare, wobei senkrecht zur Axialrichtung der Aussparung wenigstens ein Paar von Lichtkanälen vorgesehen ist, wobei jedes Paar von Lichtkanälen einen Eingangslichtkanal zum Zuführen von Lichtstrahlen zu der Kapillare und einen Ausgangslichtkanal zum Weiterleiten der Lichtstrahlen zu einer Auswerteeinrichtung aufweist, und wobei die Lichtkanäle radial bezüglich der Aussparung verlaufen und in die Aussparung münden,
**dadurch gekennzeichnet, daß**
in jedem Eingangslichtkanal (7) und jedem Ausgangslichtkanal (8) Lichtleiter (9,9' bzw. 10,10') jeweils mit mehreren Einzelfasern (11) vorgesehen sind, wobei die Lichtleiter (9,9' bzw. 10,10') vor der Kapillare (2) angeordnet sind und der Durchmesser jeder Einzelfaser (11) wenigstens annähernd dem Innendurchmesser der Kapillare (2) entspricht, und wobei pro Eingangslichtkanal (7) und pro Ausgangslichtkanal (8) mehrere Einzelfasern (11) der Lichtleiter (10,10') im Bereich der Mündung der Lichtkanäle (7,8) in die Aussparung (6) parallel und/oder radial zur Längsachse (12) der Kapillare (2) angeordnet sind.

2. Kapillarhalter nach Anspruch 1,
**dadurch gekennzeichnet, daß**
die Lichtleiter (10,10'} an ihren der Aussparung (6) zugewandten Enden jeweils ein Querschnittswandlungsglied (9,9') zum Umwandeln der Querschnittsfläche der Lichtleiter (10,10') aufweisen.

3. Kapillarhalter nach Anspruch 1 oder 2,
**dadurch gekennzeichnet, daß**
jeder Ausgangslichtkanal (8) seinem zugeordneten Eingangslichtkanal (7) bezüglich der Aussparung (6) diametral gegenüberliegt.

4. Kapillarhalter nach einem der Ansprüche 1 bis 3,
**dadurch gekennzeichnet, daß**
bei zwei Paaren von Lichtkanälen jeweils die beiden Eingangslichtkanäle (7) und die beiden Ausgangslichtkanäle (8) sich diametral gegenüberliegend bezüglich der Aussparung (6) angeordnet sind.

5. Kapillarhalter nach einem der Ansprüche 1 bis 4,
**dadurch gekennzeichnet, daß**
die Anzahl der Einzelfasern (11) in jedem Eingangslichtkanal (7) jeweils der Anzahl der Einzelfasern (11) in jedem zugeordneten Ausgangslichtkanal (8) entspricht.

6. Kapillarhalter nach einem der Ansprüche 1 bis 5,
**dadurch gekennzeichnet, daß**
die Lichtleiter (10,10') biegsam sind.

7. Kapillarhalter nach einem der Ansprüche 1 bis 6,
**dadurch gekennzeichnet, daß**
die Lichtleiter (10,10') jeweils plane Enden aufweisen.

8. Kapillarhalter nach einem der Ansprüche 1 bis 7,
**dadurch gekennzeichnet, daß**
die Lichtleiter (10,10') aus Quarz-Quarz-Fasern bestehen.

9. Kapillarhalter nach Anspruch 8,
**dadurch gekennzeichnet, daß**
die Quarz-Quarz-Fasern mit einer Bufferbeschichtung versehen sind.

10. Kapillarhalter nach einem der Ansprüche 1 bis 9,
**dadurch gekennzeichnet, daß**
Ansohlußglieder (5,5') für weitere Lichtleiter an der Außenseite des Kapillarhalters (1) vorgesehen sind.

11. Kapillarhalter nach Anspruch 10,
**dadurch gekennzeichnet, daß**
die Anschlußglieder als standardisierte Steckverbindungen mit Stiften (5,5') ausgebildet sind.

12. Kapillarhalter nach einem der Ansprüche 1 bis 11,
**gekennzeichnet durch**
eine Fixierung der Kapillare (2) in der Aussparung (6) mittels einer Spannzange (4).

## Claims

1. Capillary tube holder, having a capillary tube and having a recess for receiving the capillary tube, wherein at right angles to the axial direction of the recess at least one pair of light channels is provided, wherein each pair of light channels comprises an input light channel for supplying light beams to the capillary and an output light channel for passing the light beams to an evaluation device, and wherein the light channels extend radially relative to the recess and open out into the recess,
**characterized in that**
in each input light channel (7) and each output light channel (8) optical waveguides (9, 9' and/or 10, 10) each comprising a plurality of individual fibres (11) are provided, wherein the optical waveguides (9, 9' and/or 10, 10') are disposed in front of the capillary tube (2) and the diameter of each individual fibre (11) corresponds at least approximately to the inside diameter of the capillary tube (2), and wherein per input light channel (7) and per output light channel (8) a plurality of individual fibres (11) of the optical waveguides (10, 10') in the region of opening of the light channels (7, 8) into the recess (6) are disposed parallel and/or radially relative to the longitudinal axis (12) of the capillary tube (2).

2. Capillary tube holder according to claim 1,
**characterized in that**
the optical waveguides (10, 10') at their ends directed towards the recess (6) comprise in each case a cross-section conversion member (9, 9') for converting the cross-sectional area of the optical waveguides (10, 10').

3. Capillary tube holder according to claim 1 or 2,
**characterized in that**
each output light channel (8) lies in relation to the recess (6) diametrically opposite its associated input light channel (7).

4. Capillary tube holder according to one of claims 1 to 3,
**characterized in that,**
given two pairs of light channels, in each case the two input light channels (7) and the two output light channels (8) are disposed in relation to the recess (6) diametrically opposite one another.

5. Capillary tube holder according to one of claims 1 to 4,
**characterized in that**
the number of individual fibres (11) in each input light channel (7) corresponds in each case to the number of individual fibres (11) in each associated output light channel (8).

6. Capillary tube holder according to one of claims 1 to 5,
**characterized in that**
the optical waveguides (10, 10') are flexible.

7. Capillary tube holder according to one of claims 1 to 6,
**characterized in that**
the optical waveguides (10, 10') each have plane ends.

8. Capillary tube holder according to one of claims 1 to 7,
**characterized in that**
the optical waveguides (10, 10') are made of quartz-quartz fibres.

9. Capillary tube holder according to claim 8,
**characterized in that**
the quartz-quartz fibres are provided with a buffer coating.

10. Capillary tube holder according to one of claims 1 to 9,
**characterized in that**
connecting members (5, 5') for further optical waveguides are provided on the outside of the capillary tube holder (1).

11. Capillary tube holder according to claim 10,
**characterized in that**
the connecting members take the form of standardized plug-in connections with pins (5, 5').

12. Capillary tube holder according to one of claims 1 to 11,
**characterized by**
a fixing of the capillary tube (2) in the recess (6) by means of a collet (4).

## Revendications

1. Support de capillaire comprenant un capillaire et un évidement destiné à recevoir le capillaire, dans lequel il est prévu, perpendiculairement à la direction axiale de l'évidement, au moins une paire de canaux de lumière, chaque paire de canaux de lumière comprenant un canal d'entrée de lumière servant à acheminer des rayons lumineux au capillaire et un canal de lumière de sortie servant à transmettre les rayons lumineux à un dispositif d'analyse, et dans lequel les canaux de lumière s'étendent radialement par rapport à l'évidement et débouchent dans l'évidement,
**caractérisé en ce que**,
des conducteurs de lumière (9, 9' ou respectivement 10, 10') comprenant chacun plusieurs fibres simples (11) sont prévus dans chaque canal de lumière d'entrée (7) et dans chaque canal de lumière de sortie (8), les conducteurs de lumière (9, 9' ou respectivement 10, 10') étant disposés en amont du capillaire (2) et le diamètre de chaque fibre simple(11) correspondant au moins approximativement au diamètre intérieur du capillaire (2), tandis que, pour chaque canal de lumière d'entrée (7) et pour chaque canal de lumière de sortie (8), plusieurs fibres simples (11) des conducteurs de lumière (10, 10') sont disposées parallèlement et/ou radialement à l'axe longitudinal (12) du capillaire (2), dans la zone où les canaux de lumière (7, 8) débouchent dans l'évidement (6).

2. Support de capillaire selon la revendication 1,
**caractérisé en ce que**
chacun des conducteurs de lumière (10, 10') comporte à son extrémité dirigée vers l'évidement (6) un organe de conversion de la section (9, 9') destiné à convertir la surface de la section du conducteur de lumière (10, 10').

3. Support de capillaire selon la revendication 1 ou 2,
**caractérisé en ce que**
chaque canal de lumière de sortie (8) est diamétralement opposé au canal de lumière d'entrée correspondant (7) par rapport à l'évidement (6).

4. Support de capillaire selon l'une des revendications 1 à 3,
**caractérisé en ce que**,
lorsqu'il y a deux paires de canaux de lumière, les deux canaux de lumière d'entrée (7) et les deux canaux de lumière de sortie (8) sont diamétralement opposés par rapport à l'évidement (6).

5. Support de capillaire selon l'une des revendications 1 à 4,
**caractérisé en ce que**
le nombre de fibres simples (11) contenues dans chaque canal de lumière d'entrée (7) correspond au nombre de fibres simples (11) contenues dans le canal de lumière de sortie correspondant (8).

6. Support de capillaire selon l'une des revendications 1 à 5,
**caractérisé en ce que**
les conducteurs de lumière (10, 10') sont souples.

7. Support de capillaire selon l'une des revendications 1 à 6,
**caractérisé en ce que**
les conducteurs de lumière (10, 10') comportent des extrémités planes.

8. Support de capillaire selon l'une des revendications 1 à 7,
**caractérisé en ce que**
les conducteurs de lumière (10, 10') sont formés de fibres quartz-quartz.

9. Support de capillaire selon la revendication 8,
**caractérisé en ce que**
les fibres quartz-quartz sont pourvues d'un revêtement tampon.

10. Support de capillaire selon l'une des revendications 1 à 9,
**caractérisé en ce que**
des organes de raccordement (5, 5') pour d'autres conducteurs de lumière sont prévus sur le côté extérieur du support de capillaire (1).

11. Support de capillaire selon la revendication 10,
**caractérisé en ce que**
les organes de raccordement sont constitués par des connecteurs mâle-femelle standardisés comprenant des broches (5, 5').

12. Support de capillaire selon l'une des revendications 1 à 11,
**caractérisé par**
une fixation du capillaire (2) dans l'évidement (6) au moyen d'une pince de serrage (4).
